Europäisches Patentamt

European Patent Office

Office européen des brevets

(19)

(11) Numéro de publication : **0 512 931 A1**

(12) ## DEMANDE DE BREVET EUROPEEN

(21) Numéro de dépôt : **92420142.9**

(22) Date de dépôt : **28.04.92**

(51) Int. Cl.⁵ : **B60N 2/04**

(30) Priorité : **03.05.91 FR 9105777**

(43) Date de publication de la demande :
**11.11.92 Bulletin 92/46**

(84) Etats contractants désignés :
**AT BE CH DE DK ES GB GR IT LI LU NL PT SE**

(71) Demandeur : **GRAMMER-SABLE, Société Anonyme**
**Beaulieu**
**F-42230 Roche la Molière (Loire) (FR)**

(72) Inventeur : **Linde, Peter**
**Kremenholler Strasse 98**
**W-5630 Remscheid (DE)**

(74) Mandataire : **Perrier, Jean-Pierre et al**
**Cabinet GERMAIN & MAUREAU 12 rue de la République**
**F-42000 St-Etienne (FR)**

(54) **Dispositif pour la fixation amovible d'un siège dans un véhicule.**

(57)     Ce dispositif est applicable aux sièges dont le piètement comprend au moins un pied (4).

Selon l'invention, il comprend d'une part, à l'extrémité inférieure de chaque pied (4), une platine horizontale d'appui (5) formant une collerette autour de ce pied, d'autre part, liée au plancher dans la zone de fixation pour chaque pied (4), une ferrure (6) ayant, en vue de dessus, la forme d'un C apte à entourer le pied sur trois côtés et présentant une feuillure interne (7) apte à recevoir trois des côtés de la collerette de la platine (5) du pied (4) pour en assurer le calage en translation verticale et le calage en translation horizontale sur trois côtés, et, de plus, un doigt amovible (10) se fixant dans le plancher e à proximité du bord libre de la platine (5) du pied pour constituer moyens de calage en translation du quatrième côté de la platine.

FIG.4

L'invention est relative aux moyens de fixation des sièges disposés dans un véhicule de type car, mini-bus, avion ou wagon.

Actuellement, les sièges et banquettes disposés dans un véhicule de transport des personnes sont fixés au plancher du véhicule par de nombreux boulons et vis, ce qui conduit à un temps de montage et de démontage long, peu favorable à une transformation rapide du véhicule.

En effet, pour les véhicules utilisés pour le ramassage des personnes en début et fin de journée, et par exemple pour les mini-bus, de même que pour les wagons ou habitacles d'avion, il s'avère de plus en plus souhaitable de pouvoir les transformer pour leur permettre, sur une partie de la journée, de transporter du fret dans l'intervalle entre le transport de personne..

Cette transformation devant être effectuée au moins deux fois par jour, doit, non seulement, être rapide mais aussi pouvoir être effectuée par un petit nombre de personnes et procurer, en situation de transport de fret, un plancher plan sans aspérité ou relief gênant la pose des colis. Dans les véhicules actuels, et après que les sièges aient été démontés et sortis de l'habitacle, le plancher reste, en général, encombré par les glissières de fixation des sièges, mais aussi par les éléments d'ancrage des éléments de ceintures de sécurité. De ce fait, le démontage des sièges et de ses accessoires ne peut pas être envisagé à chaque transformation en raison du temps supplémentaire exigé pr le démontage de ces accessoires. Il en résulte que la transformation ne peut être que partielle et qu'en pratique, elle est peu pratique.

La présente invention a pour but de remédier à cela en fournissant un dispositif de fixation amovible des sièges d'un véhicule permettant une transformation rapide de ce véhicule, procurant un plancher dégagé et éliminant les problèmes posés par la présence des éléments de ceinture de sécurité.

A cet effet, le dispositif selon l'invention, comprend d'une part, à l'extrémité inférieure de chaque pied d'un siège, une platine horizontale d'appui formant une collerette autour de ce pied, d'autre part, liée au plancher dans la zone de fixation pour chaque pied, une ferrure ayant, en vue de dessus, la forme d'un C apte à entourer le pied sur trois côtés et présentant une feuillure interne apte à recevoir trois des côtés de la collerette du pied pour en assurer le calage en translation verticale et le calage en translation horizontale sur trois côtés, et, de plus, un doigt amovible se fixant dans le plancher et à proximité du bord libre de la collerette du pied pour constituer moyens de calage en translation du quatrième côté de la platine.

Grâce à cet agencement, la fixation de chaque pied dans la ferrure s'effectue par translation, avec engagement de la platine dans le C de la ferrure et par verrouillage au moyen du doigt amovible.

Il est évident que le démontage s'effectue en procédant de façon inverse.

Indépendamment de la rapidité avec laquelle le montage ou le démontage peut être effectué, le dispositif selon l'invention assure une liaison très résistante du piètement du siège par rapport au plancher, ce qui permet d'accrocher les extrémités libres des ceintures de sécurité associées à chaque siège non pas sur le plancher mais directement sur le siège.

Cet agencement réduit les temps de montage et de démontage et permet d'obtenir, après démontage du siège, une surface de plancher pratiquement plane, à la présence des ferrures près, facilitant le stockage du fret.

Selon la forme d'exécution, les ferrures sont fixées directement sur le plancher du véhicule, en surface ou dans un puits, ou sont fixées sur une embase de répartition des efforts, elle-même rapportée sur le plancher et fixée à lui aux moyens de vis disposés dans les puits filetés ménagés dans ce plancher pour la fixation des glissières traditionnelles ou pour l'accrochage des ceintures de sécurité.

Cette dernière disposition présente l'avantage d'améliorer la résistance mécanique du plancher et de lui permettre de subir les éventuels efforts provenant de l'appui sur lui des platines de siège dans le cas de choc frontal projetant en avant le passager lié au siège par la ceinture de sécurité.

D'autres caractéristiques et avantages ressortiront de la description qui suit en référence aux dessins schématiques annexés représentant, à titre d'exemples non limitatifs, plusieurs formes d'exécution du dispositif de fixation selon l'invention.

Figure 1 est une vue en perspective représentant une première forme d'exécution du dispositif dans le cas de son application à une banquette comportant deux pieds,

Figure 2 est une vue partielle en perspective et avec coupe partielle d'une variante de réalisation du montage de la ferrure sur le plancher,

Figure 3 est une vue partielle en perspective représentant l'extrémité d'un pied,

Figure 4 est une vue en coupe transversale montrant le montage du pied de figure 3 dans la ferrure de figure 2,

Figure 5 est une vue partielle en coupe transversale montrant une variante de réalisation du montage de la ferrure,

Figures 6 et 7 sont des vues en plan par dessus montrant deux des formes d'exécution de l'embase pouvant être rapportée sur le plancher du véhicule.

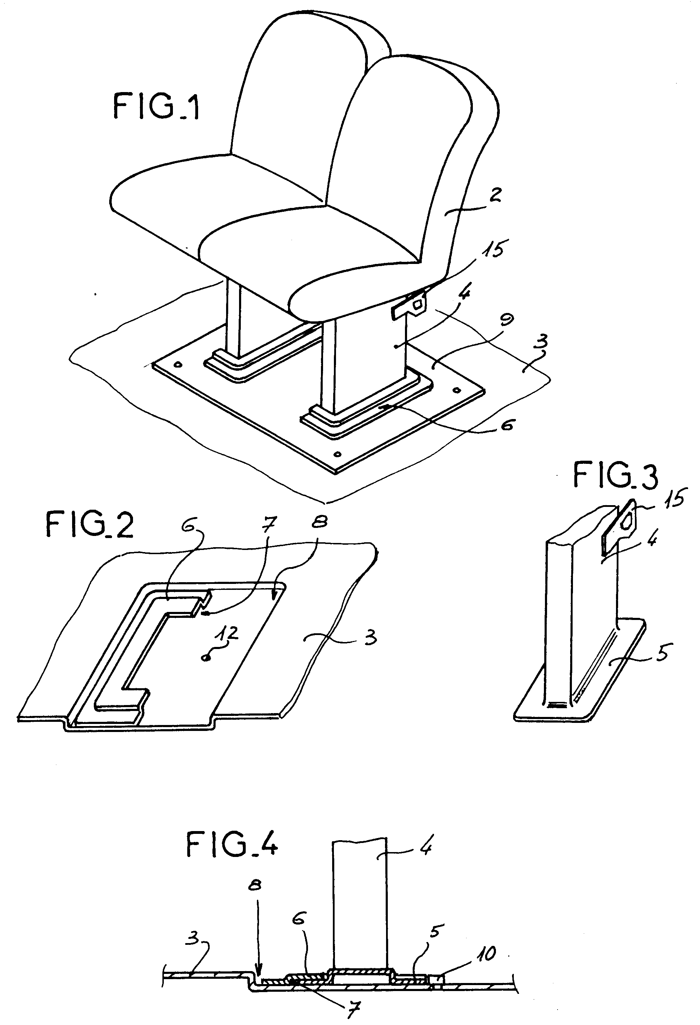

A la figure 1, 2 désigne une banquette composée de deux sièges dont la structure est liée au plancher 3 du véhicule par deux pieds tubulaires verticaux 4.

Selon l'invention, et comme montré à la figure 3, chacun des pieds 4 est muni à son extrémité libre inférieure d'une platine d'appui 5 formant une collerette périphérique et augmentant sa surface d'appui sur le sol. Chaque platine 5 est destinée à coopérer avec une ferrure 6 qui, comme montré aux figures 1 et 2, présente, en vue par dessus, la forme générale d'un C ouvert d'un côté. Dans la forme d'exécution représentée, les C sont ouverts sur l'un de leurs bords longitudinaux, de façon à permettre un engagement transversal des platines 5 des pieds 4, mais il est évident qu'ils peuvent aussi être ouverts sur un bord transversal, par exemple celui situé en amont, pour permettre l'engagement longitudinal des platines 5.

Chaque ferrure 6 est conformée pour comporter intérieurement, et comme montré à la figure 2, une feuillure 7 apte à recevoir trois des côtés de la platine 5 en en assurant le calage en translation verticale, le calage en translation longitudinale et son calage en translation transversale sur un côté.

Dans la forme d'exécution représentée à la figure 2, la ferrure 6 est fixée, notamment par soudure, sur le fond d'un puits 8 ménagé dans le plancher 3 du véhicule, mais elle peut aussi, comme montré à la figure 1, être fixée sur une embase 9 elle-même rapportée sur le plancher 3, comme cela sera précisé plus loin.

Comme le montre la figure 4, lorsque la platine 5 est engagée dans la ferrure 6 correspondante, sa collerette périphérique s'insère dans la feuillure 7 de la platine 6 qui en assure le calage en translation sur trois côtés.

Son calage en translation transversale, à l'opposé de l'âme de la feuillure en C 6, est assuré par un doigt 10 qui est fixé dans le plancher 3, par exemple dans le fond du puits 8, comme montré figure 4. Ce doigt amovible est, par exemple, constitué par une vis, dont la tige filetée se visse dans le fond du puits et/ou dans le plancher et dont la tête vient à proximité immédiate du bord libre de la collerette pour éviter tous mouvements transversaux, de la platine 5, dans la feuillure 7 de la ferrure 6.

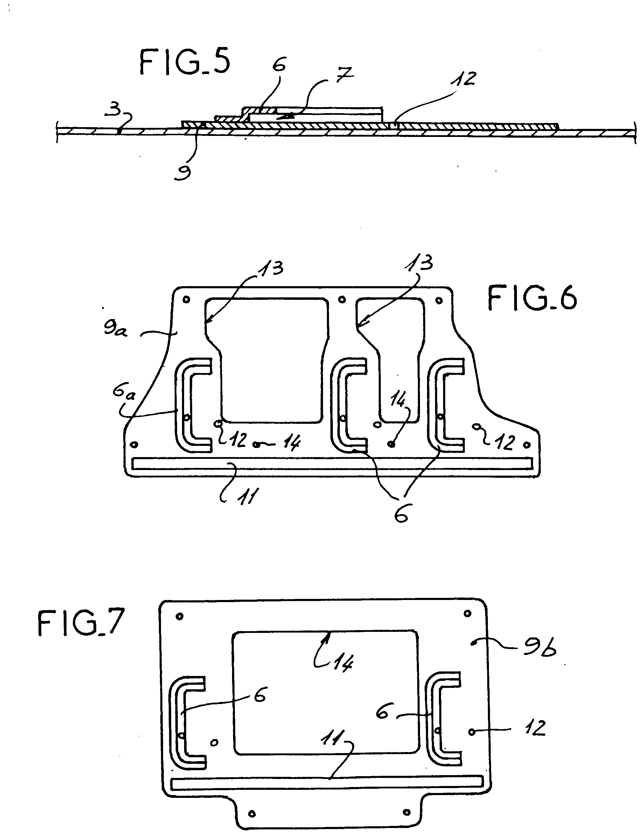

Dans une autre forme d'exécution représentée à la figure 5, la ferrure 6 est fixée sur une embase 9 qui, comportant le puits fileté 12 pour le doigt 10 est, elle-même, fixée sur le plancher 3, par soudure ou par des vis ou boulons non représentés.

Le recours à cette embase 9, qui est renforcée et nervurée en 11, présente de nombreux avantages. En particulier, elle permet de débarrasser la surface du plancher de toutes les glissières traditionnelles servant à la fixation des sièges et d'apporter, dans chaque zone de fixation d'un siège ou d'une banquette, un renfort mécanique améliorant la résistance du plancher. Ce surcroît de résistance est particulièrement intéressant, puisqu'il a lieu dans la zone où les efforts communiqués par le siège occupé par le passager sont transmis au plancher par la platine 5. Plus précisément, grâce à cette embase qui répartit sur une plus grande surface du plancher les efforts sollicitant le siège ou la banquette occupé par les passagers, il est possible de former une structure suffisamment résistante pour que les extrémités des ceintures de sécurité ne soient plus accrochées directement sur le plancher, mais sur des pattes 15 rapportées sur les pieds 4, ou sur l'armature de siège ou de la banquette. Un tel agencement libère le monteur des contraintes de montage et de démontage des ceintures de sécurité et permet, après transformation du véhicule de transport de personnes en véhicule de transport de fret, de disposer d'un plancher dégagé favorable au stockage du fret.

Les figures 6 et 7 montrent deux formes d'exécution de l'embase 9.

A la figure 6, l'embase 9a, coupée extérieurement aux formes internes du véhicule, est renforcée par une nervure 11 et comporte deux ferrures 6 pour une banquette et une ferrure 6a pour un siège seul. Cette embase est allégée par des découpes internes 13 qui ne modifient pas sa résistance. Elle est munie de trous 14 permettant sa fixation par des vis s'engageant dans les puits filetés ménagés dans le plancher, pour fixer, soit les traditionnelles glissières pour les sièges et banquettes, soit les extrémités des éléments des ceintures de sécurité associés à chaque siège ou banquette.

Dans la forme d'exécution représentée à la figure 6, l'embase 9b comporte deux ferrures pour une banquette. Elle est également renforcée par une nervure 11 et comporte une découpe centrale 14 assurant son allégement sans pour autant diminuer sa résistance ou la répartition des forces sur le plancher.

Il est évident que le recours à des embases 9 est plus particulièrement destiné aux véhicules déjà en service et que le montage direct des platines 5 dans des ferrures 6 solidaires du plancher, comme montré aux figures 2 et 4, que ces ferrures soient noyées ou fixées directement sur le plancher, concerne des véhicules dont le plancher a été aménagé pour résister aux efforts que peuvent lui communiquer les platines 5.

Enfin, ce dispositif qui a été décrit dans le cas de son application aux véhicules automobiles et notamment aux mini-bus pouvant accueillir jusqu'à dix personnes, peut bien entendu être appliqué aux cars de plus grande capacité, mais aussi aux wagons et habitacles d'avion transportant des personnes le jour, et du fret la nuit.

**Revendications**

1. Dispositif pour la fixation amovible de siège dans un véhicule du type dans lequel chaque siège est solidaire d'un piètement comportant au moins un pied (4), caractérisé en ce qu'il comprend, d'une part, à l'extrémité inférieure de chaque pied (4), une platine horizontale d'appui (5) formant une collerette autour de ce pied, d'autre part, liée au plancher dans la zone de fixation pour chaque pied (4), une ferrure (6) ayant, en vue de dessus, la forme d'un C apte à entourer le pied sur trois côtés et présentant une feuillure interne (7) apte à recevoir trois des côtés de la collerette de la platine (5) du pied (4) pour en assurer le calage en translation verticale et le calage en translation horizontale sur trois côtés, et, de plus, un doigt amovible (10) se fixant dans le plancher et à proximité du bord libre de la platine (5) du pied pour constituer moyens de calage en translation du quatrième côté de la platine.

2. Dispositif selon la revendication 1, caractérisé en ce que chaque ferrure (6) est fixée directement sur le plancher.

3. Dispositif selon l'une quelconque des revendications 1 et 2, caractérisé en ce que chaque ferrure (6) est disposée dans un puits (8) ménagé dans le plancher (3).

4. Dispositif selon la revendication 1, caractérisé en ce que les ferrures (6) pour la fixation d'au moins un siège sont fixées sur une embase commune (9-9a-9b) de répartition des efforts sur le plancher (3), embase fixée sur le plancher par des moyens de liaison filetés coopérant avec les puits filetés (14) ménagés dans le plancher (3) pour la fixation des sièges et des éléments de ceintures de sécurité.

5. Dispositif selon l'une quelconque des revendications 1 à 4, caractérisé en ce que les éléments d'accrochage (15) des ceintures de sécurité sont fixés sur les pieds (4).

6. Dispositif selon l'une quelconque des revendications 1 à 4, caractérisé en ce que les éléments d'accrochage (15) des ceintures de sécurité sont fixés sur l'armature de siège.

7. Dispositif selon l'une quelconque des revendications 5 et 6, caractérisé en ce que, lorsque les éléments de ceinture sont fixés à la structure du siège, chaque embase (9a-9b) est renforcée par des nervures (11).

**FIG.1**

2

15

4

9

3

6

**FIG.2**

6 7 8

12

3

**FIG.3**

15

4

5

**FIG.4**

4

8

6

5

10

3

7

FIG.5

FIG.6

FIG.7

Office européen
des brevets

**RAPPORT DE RECHERCHE EUROPEENNE**

Numero de la demande

EP 92 42 0142

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-2 104 818 (SCHJOLIN)<br>* colonne 1, ligne 28 - colonne 3, ligne 7; figures * | 1,2 | B60N2/04 |
| A | FR-A-2 031 438 (FIRMA WILLIBALD GRAMMER)<br>* revendication 1; figures * | 1 | |
| A | US-A-4 588 225 (SAKAMOTO) | | |
| A | GB-A-2 128 473 (MOTOR PANELS) | | |
| A | US-A-4 114 947 (NELSON) | | |
| A | FR-A-2 475 999 (ETABLISSEMENTS COMPIN) | | |

DOMAINES TECHNIQUES
RECHERCHES (Int. Cl.5)

B60N
B61D
B64D

Le présent rapport a été établi pour toutes les revendications

| Lieu de la recherche | Date d'achèvement de la recherche | Examinateur |
|---|---|---|
| LA HAYE | 14 JUILLET 1992 | GATTI Carlo |